# EUROPEAN PATENT SPECIFICATION

(11) **EP 1 436 557 B1**
(45) Date of publication and mention of the grant of the patent: **24.06.2009**
(21) Application number: 02773134.8
(22) Date of filing: 23.09.2002
(51) Int. Cl.: F25D 17/06, F25D 29/00, F25B 49/02

(54) **REFRIGERATOR CONTROL METHOD**
STEUERUNGSVERFAHREN FÜR KÜHLSCHRANK
PROCEDE DE COMMANDE DE REFRIGERATEUR

(30) Priority: 21.09.2001 TR 200102656
(43) Date of publication of application: 14.07.2004
(73) Proprietor: Arçelik A.S., 34950 Istanbul (TR)
(72) Inventor: GÜLDALI, Yalçin, 34950 Istanbul (TR); EFECIK, Bülent, 34950 Istanbul (TR); HOCAOGLU, Sabahattin, 34950 Istanbul (TR)
(86) International application number: PCT/TR2002/000056
(87) International publication number: WO 2003/025480

(56) References cited:
- US-A- 5 255 530
- US-A- 5 555 736
- US-A- 5 711 159
- PATENT ABSTRACTS OF JAPAN vol. 1995, no. 04, 31 May 1995 (1995-05-31) & JP 07 019699 A (MATSUSHITA REFRIG CO LTD), 20 January 1995 (1995-01-20)

## Description

The present invention relates to a control method used in refrigerators that makes it possible to regulate the capacity of a compressor with variable capacity control.

In the state of art, compressors with variable capacity control which are briefly referred to as "VCC compressor" are used in the refrigerators. In such type of compressors, the control of capacity is possible. Therefore, the design of the refrigerator and its functions can be made by taking into consideration the general customer usage conditions which are close to the standard energy consumption. As it is possible to adapt the capacity of the compressor according to the conditions to which the refrigerator is exposed during its operation, this situation directly effects the energy consumption of the refrigerator in the positive sense. Various methods have been developed to control the capacity of the compressor.

One of said methods is disclosed in the US Patent No. 5586444, wherein the capacity of a VCC compressor is controlled by the PID method. However this method is sensitive towards the tolerances of the components on the cooling and air distribution system of the refrigerator. The PID parameters determined on one sample, may not give satisfactory results on another sample.

In another known embodiment of the state of art, the capacity of the compressor is adjusted manually. In this case the refrigerator can attain a low energy consumption but its cooling performance decreases as it cannot respond dynamically to the thermal loads occurring during operation.

Another refrigerator control method is known from US Patent no.5 555 736.

In the European Patent Application No. 0859208, a control method is employed on a refrigerator with an evaporator that is connected in series to both of its compartments. In this method, the control for opening/closing the compressor is made by a sensor placed in the cooling compartment and the control of the compressor capacity is made by a sensor placed in the freezer compartment of the refrigerator. This method is quite complex and cannot meet the requirements satisfactorily.

The object of the present invention is to provide the operation of the compressor at the optimum capacity according to the thermal and moisture loads occurring in the refrigerator.

The refrigerator control method realized to attain said object of the present invention has been illustrated in the attached drawings, wherein:

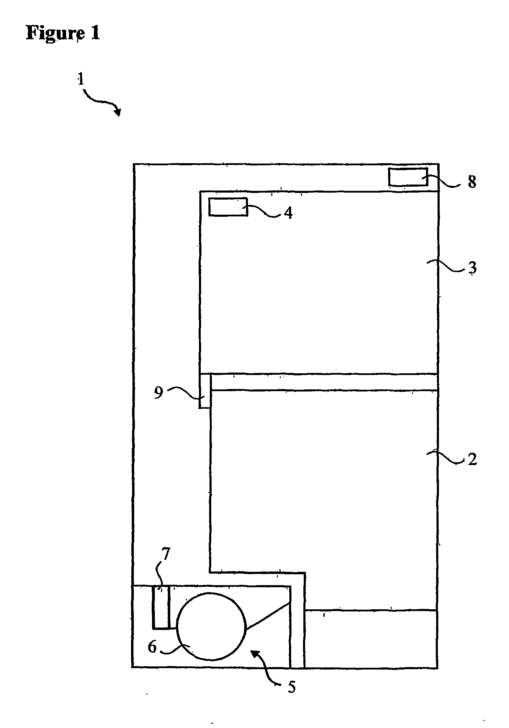

Figure 1, is the schematic view of the refrigerator

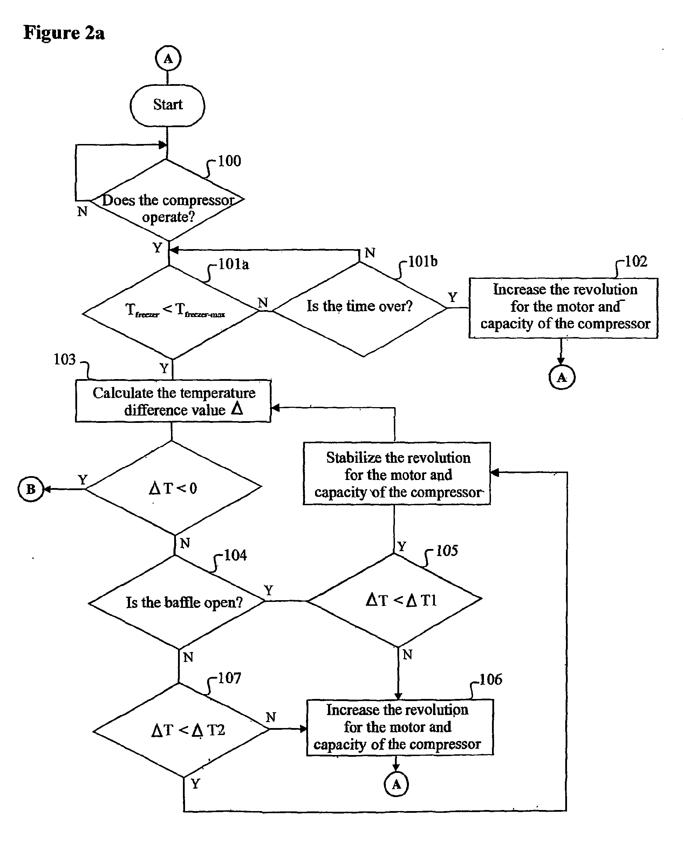

Figure 2a, is the flow chart of the refrigerator control method wherein the compressor capacity is increased,

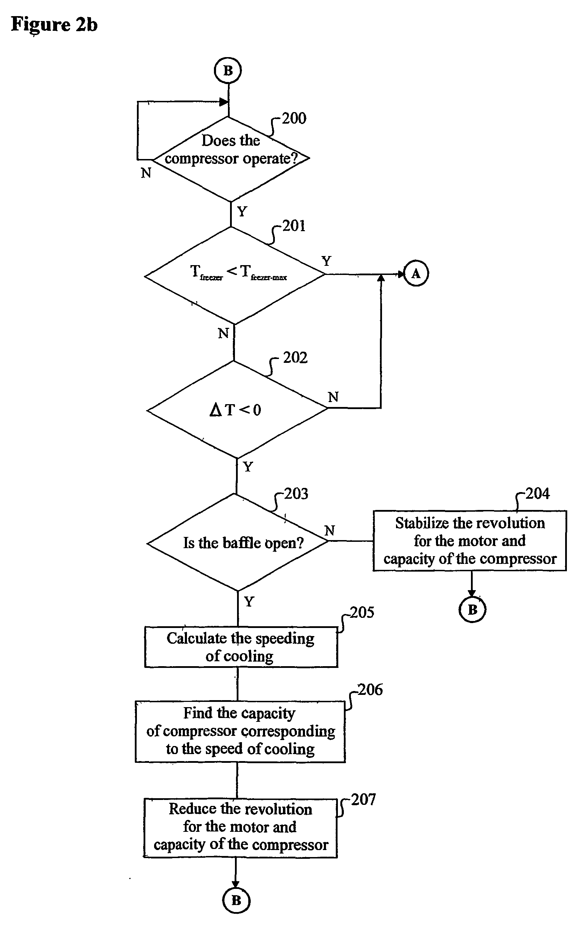

Figure 2b, is the flow chart of the refrigerator control method wherein the compressor capacity is decreased,

The components shown in the drawings have been numerated individually as shown below:
1. Refrigerator
2. Fresh food compartment
3. Freezer compartment
4. Temperature sensor
5. Compressor
6. Motor
7. Convertor
8. Control card
9. Baffle

The refrigerator (1) comprises a fresh food storage compartment (2), a freezer compartment (3), a temperature sensor (4) provided in the freezer compartment (3), a baffle (9) to control the flow of air from the freezer compartment (3) to the fresh food compartment (2), a compressor (5) compressing and circulating the refrigerant, provided with a motor (6); and a control card (8). A convertor (7) is used to enable the motor (6) provided in the compressor (5) to operate at different rotational speeds in order to control said compressor (5). The convertor (7) regulates the number of revolutions of the motor (6) of the compressor (5) depending on the signals sent from the control card (8) which evaluates the data obtained from the temperature sensor (4) placed in the freezer compartment (3).

In the method according to the invention, the compressor (5) operates at various capacities and the motor (6) runs in a determined range of revolutions per minute, e.g. 1600 and 4500 rpm, during the operational cycle of the refrigerator. The capacity of the compressor (5) increases as the number of revolutions increases. The variations of revolution in the motor (6) depending on the defined stages, are effected by the temperature in the freezer compartment (3) and the position of the baffle (9). In other words, when a change in the capacity of the compressor (5) is intended to be made, the temperature in the freezer compartment (3) and the position of the baffle (9) are controlled and then the decision on whether the number of revolutions of the motor (5) is to be changed or not, is made.

When the refrigerator (1) is first initiated to operate, the compressor (5) starts to operate at a maximum number of revolutions of the motor: thus, the refrigerator (1) attains the desired temperature as soon as possible. After the first pause, the compressor (5) drops to the minimum number of revolutions of the motor. Similarly, the compressor (5) operating at maximum number of revolutions before and after defrosting, then drops to minimum number of revolutions.

The refrigerator (1) control method according to the invention comprises two sub-decision processes, namely increasing and decreasing the compressor (5) capacity according to varying thermal loads. Both decisions are made during the time period when the compressor (5) is operating.

The decision to increase the capacity of the compressor (5) is made according to the following sub-decision process. In this sub decision process, first the on/off condition of the compressor (5) is checked (100). If it is operating, i.e. "on", the temperature in the freezer compartment (3) is controlled to see if it drops below the upper limit value (Tfreezer-max) of the temperature range within the limits of which the freezer compartment (3) temperature (Tfreezer) should be (101a). In case the temperature value of the freezer compartment (3) does not fall below the upper limit value of said temperature range, in a determined time period (101b), the compressor (5) capacity and thus the number of revolutions for the motor (6) is preferably upgraded one step (102). In case the temperature value of the freezer compartment (3) falls below said upper limit value, the first and last temperature values in a given time period are measured by the temperature sensor (4) and the differential temperature (ΔT) is calculated by subtracting the first value from the last value (103). If this difference of temperature (ΔT) is positive, i.e. there is a tendency to an increase in temperature, the open/closed position of the baffle (9) is checked (104). If the baffle is open, cooling of the freezer compartment takes longer, since the cooled air that is obtained by passing the air over the evaporator is directed to the fresh food compartment. On the other side, the freezer compartment cools faster when the baffle is closed. If it is open the calculated temperature difference (ΔT) value is compared to the predetermined first temperature difference (ΔT1) value (105). If the temperature difference value (ΔT) is greater than the first predetermined value (ΔT1), a decision to increase the capacity of the compressor (5) is made (106) and the number of revolutions of the motor (6) is increased; otherwise, i.e. if ΔT is smaller than ΔT1, the capacity is kept constant and the process returns to step (103) where new temperature values are measured and a new temperature difference is calculated. In the 104^{th} step, if the baffle is closed it is assumed that the freezer compartment will be cooled more rapidly and the temperature difference value (ΔT) is compared to a second predetermined difference value (ΔT2), (107). If the temperature difference value (ΔT) is greater than the second predetermined difference value (ΔT2), a decision to increase the capacity of the compressor (5) is made (106) and the number of revolutions for the motor (6) is increased; otherwise, i.e. if ΔT is smaller than ΔT2, the capacity is kept constant and the process returns to step (103) where new temperature values are measured and a new temperature difference is calculated. During the operation of the method according to the invention, if no increase occurs in the compressor (5) capacity, after it starts to operate or after its capacity is increased at any moment within a determined time period, its capacity is increased at the end of the determined time period (106). As the fresh food compartment (2) temperature may continue to increase for a certain time, after the increase in the capacity of the compressor (5), a decision to increase the number of revolutions for the motor once more, should not be made according to the measurements taken in this period, a certain time should pass before making a decision.

The decision to decrease the capacity of the compressor (5) is made according to the following sub-decision process. In this sub decision process, first the on/off condition of the compressor (5) is checked (200). If it is operating, i.e. "on", the temperature in the freezer compartment (3) is controlled to see if it drops below the upper limit value (Tfreezer-max) of the temperature range within the limits of which the freezer compartment (3) temperature (T_{freezer}) should be (201). When the freezer compartment (3) temperature value falls below the upper limit value of said temperature range, if the temperature sensor (4) detects (202) an increase in the temperature at any moment (20) considering the possibility of a thermal load, the sub-decision process to increase the compressor (5) capacity is repeated to determine weather such an increase is required or not. As long as the temperature sensor (4) continues to record decrease in temperature, the sub-decision process are carried on to decrease the compressor (5) capacity. The position of the baffle (9) is checked after this step (203); if it is closed no change in the capacity of the compressor (5) is made (204), but if the baffle (9) is open, the speed of cooling (Vcooling) is calculated (205). If the baffle (9) closes before a predetermined threshold period (t) is passed, the cooling speed is found by dividing the difference between the temperature values at the moments when the baffle (9) is closed and when the baffle (9) is opened to the time period when the baffle (9) remained open; and if it is not closed during the predetermined open state period (t), the cooling speed is found by dividing the difference between the temperature value determined at the end of the threshold period and the value at the moment when the baffle (9) is opened, to the threshold period (t). Then the compressor (5) capacity corresponding to the actual compressor (5) capacity and cooling speed (Vcooling) is found from the table showing the experimental data (206) and the compressor (5) is operated after being brought to this capacity (207).

## Claims

1. A refrigerator control method for a refrigerator (1) comprising a fresh food storage compartment (2), a freezer compartment (3), a temperature sensor (4) provided in the freezer compartment (3), a baffle (9) to control the flow of air from the freezer compartment (3) to the fresh food compartment (2), a compressor (5) compressing and circulating a refrigerant, provided with a motor (6), a convertor (7) enabling the operation of the compressor (5) at different number of revolutions of the motor (6) **characterised by** a control card (8) enabling said refrigerator (1) to operate as required, which increases the capacity of the compressor (5) by increasing the number of revolutions of the motor (6) depending on the open/closed position of the baffle (9) and on the amount of the temperature increase in the freezer compartment (3) during the operation of said compressor (5), or decreases the capacity of the compressor (5) by decreasing the number of revolutions for the motor (6) depending on a freezer compartment (3) cooling speed when the baffle (9) is open.

2. A refrigerator control method as defined in Claim 1, comprising the steps of
- checking whether the compressor (5) is operating or not step (100),
- if the compressor (5) is operating, checking whether the temperature in the freezer compartment (3) drops below an upper limit value of the temperature range within the limits of which the freezer compartment (3) temperature should be step (101a),
- in case the temperature value of the freezer compartment (3) does not fall below the upper limit value of said temperature range, in a determined time period step (101b), increasing the compressor (5) capacity and thus the number of revolutions for the motor (6) step (102),
- in case the temperature value of the freezer compartment (3) falls below said upper limit value, measuring the first and last temperature values in a given time period by the temperature sensor (4) and calculating the differential temperature (ΔT) between these values step (103),
- if this difference of temperature (ΔT) is positive, checking the open/closed position of the baffle (9), step (104),
- if it is open comparing the calculated temperature difference (ΔT) value to a predetermined first temperature difference (ΔT1) value step (105),
- if the temperature difference value (ΔT) is greater than the first predetermined value (ΔT1), increasing the capacity of the compressor (5) by increasing the number of revolutions for the motor (6) step (106),
- if the temperature difference value (ΔT) is smaller than the first predetermined value (ΔT1), keeping the compressor (5) capacity constant and returning to step (103) where new temperature values are measured and a new temperature difference is calculated,
- in step (104), if the baffle is closed, comparing the calculated temperature difference (ΔT) value to a second predetermined difference value (ΔT2), step (107),
- if the temperature difference value (ΔT) is greater than the second predetermined difference value (ΔT2), increasing the capacity of the compressor (5) by upgrading the number of revolutions for the motor (6), step (106),
- if the temperature difference value (ΔT) is smaller than the predetermined second difference value (ΔT2), keeping the compressor capacity constant and returning to step (103) where new temperature values are measured and a new temperature difference is calculated.

3. A refrigerator control method as defined in Claims 1 and 2, comprising the step of increasing the capacity of the compressor (5) by upgrading the number of revolutions of the motor (6), step (106), at the end of a determined time period, if no increase occurs in the compressor (5) capacity, after it starts to operate or after its capacity is increased at any moment.

4. A refrigerator control method as defined in Claim 1, comprising the steps of:
- checking whether the compressor (5) is operating or not step (200),
- if the compressor (5) is operating, checking whether the temperature in the freezer compartment (3) drops below an upper limit value of the temperature range within the limits of which the freezer compartment (3) temperature should be step (201),
- when the temperature value of the freezer compartment (3) falls below said upper limit value, determining the change of temperature in the freezer compartment (3), step (202), and in case there is an increase, a sub-decision process to increase the compressor (5) capacity is repeated to determine weather such an increase is required or not,
- in cases when the temperature sensor (4) detects a fall in the temperature, checking the Position of the baffle (9), step (203),
- if the baffle (9) is closed, keeping constant the number of revolutions of the compressor (5) motor (6) and making no changes in the compressor (5) capacity step (204)
- if the baffle (9) is open and if the baffle (9) closes before a predetermined threshold period (t) is passed or if it is not closed during a predetermined threshold period, calculating a cooling speed (Vcooling), step (205),
- fmding the compressor (5) capacity corresponding to the cooling speed (Vcooling), step (206), and decreasing the compressor (5) capacity by down grading the number of revolutions of the compressor (5) motor (6), step (207).

5. A refrigerator control method as defined in Claim 4, wherein the cooling speed value, calculated by dividing the difference between the temperature values at the moments when the baffle (9) is closed and when the baffle (9) is opened to the time period when the baffle (9) remained open, is used in case the baffle (9) closes before a predetermined threshold period (t) is passed.

6. A refrigerator control method as defined in Claim 4, wherein the cooling speed value, calculated by dividing the difference between the temperature value determined at the end of the threshold period and the value at the moment when the baffle (9) is opened, to the threshold period (t), is used in case it is not closed during the predetermined threshold period (t).

## Patentansprüche

1. Kühlschranksteuerverfahren für einen Kühlschrank (1), der ein Aufbewahrungsfach für frische Lebensmittel (2), ein Tiefkühlfach (3), einen Temperatursensor (4), der im Tiefkühlfach (3) vorgesehen ist, ein Leitblech (9) zum Steuern des Luftstroms vom Tiefkühlfach (3) zum Aufbewahrungsfach für frische Lebensmittel (2), einen Kompressor (5), der ein Kühlmittel verdichtet und zirkuliert und mit einem Motor (6) versehen ist, und einen Wandler (7) umfasst, welcher den Betrieb des Kompressors (5) bei unterschiedlichen Drehzahlen des Motors (6) ermöglicht, **dadurch gekennzeichnet, dass** eine Steuerkarte (8) es dem Kühlschrank (1) ermöglicht, dem Bedarf entsprechend zu arbeiten, wobei die Kapazität des Kompressors (5) erhöht wird, indem die Drehzahl des Motors (6) in Abhängigkeit von der offenen/geschlossenen Position des Leitblechs (9) und dem Umfang der Temperaturerhöhung im Tiefkühlfach (3) während des Betriebs des Kompressors (5) erhöht wird, oder die Kapazität des Kompressors (5) gesenkt wird, indem die Drehzahl des Motors (6) in Abhängigkeit von der Kühlgeschwindigkeit des Tiefkühlfachs (3) gesenkt wird, wenn das Leitblech (9) geöffnet ist.

2. Kühlschranksteuerungsverfahren nach Anspruch 1, folgende Schritte umfassend:
- Prüfen, ob der Kompressor (5) arbeitet oder nicht, Schritt (100),
- falls der Kompressor (5) arbeitet, Prüfen, ob die Temperatur des Tiefkühlfachs (3) unter einen oberen Grenzwert des Temperaturbereichs fällt, innerhalb dessen die Temperatur des Tiefkühlfachs (3) liegen sollte, Schritt (101a),
- falls der Temperaturwert des Tiefkühlfachs (3) nicht unter den oberen Grenzwert des Temperaturbereichs fällt, Erhöhen der Kapazität des Kompressors (5) innerhalb einer bestimmten Zeitspanne, Schritt (101b), und **dadurch** Erhöhen der Drehzahl des Motors (6), Schritt (102),
- falls die Temperatur des Tiefkühlfachs (3) unter den oberen Schwellenwert fällt, Messen des ersten und letzten Temperaturwertes innerhalb einer vorgegebenen Zeitspanne durch den Temperatursensor (4) und Berechnen der Temperaturdifferenz (ΔT) zwischen den Werten, Schritt (103),
- wenn die Temperaturdifferenz (ΔT) positiv ist, Prüfen der offenen/geschlossenen Position des Leitblechs (9), Schritt (104),
- wenn es offen ist, Vergleichen des berechneten Temperaturdifferenzwertes (ΔT) mit einem ersten vorbestimmten Temperaturdifferenzwert (ΔT1), Schritt (105),
- wenn der Temperaturdifferenzwert (ΔT) größer ist als der erste vorbestimmte Wert (ΔT1), Erhöhen der Kapazität des Kompressors (5) durch Erhöhen der Drehzahl des Motors (6), Schritt (106),
- wenn der Temperaturdifferenzwert (ΔT) kleiner ist als der erste vorbestimmte Wert (ΔT1), Konstanthalten der Kapazität des Kompressors (5) und Zurückkehren zu Schritt (103), wobei neue Temperaturwerte gemessen und eine neue Temperaturdifferenz berechnet werden,
- in Schritt (104), wenn das Leitblech geschlossen ist, Vergleichen des berechneten Temperaturdifferenzwertes (ΔT) mit einem zweiten vorbestimmten Differenzwert (ΔT2), Schritt (107),
- wenn der Temperaturdifferenzwert (ΔT) größer ist als der zweite vorbestimmte Differenzwert (ΔT2), Erhöhen der Kapazität des Kompressors (5) durch Anheben der Drehzahl des Motors (6), Schritt (106),
- wenn der Temperaturdifferenzwert (ΔT) kleiner ist als der zweite vorbestimmte Differenzwert (ΔT2), Konstanthalten der Kapazität des Kompressors (5) und Zurückkehren zu Schritt (103), wobei neue Temperaturwerte gemessen und eine neue Temperaturdifferenz berechnet wird.

3. Kühlschranksteuerungsverfahren nach den Ansprüchen 1 und 2, folgenden Schritt umfassend: Erhöhen der Kapazität des Kompressors (5) durch Anheben der Drehzahl des Motors (6), Schritt (106) am Ende der bestimmten Zeitspanne, wenn keine Erhöhung der Kapazität des Kompressors (5) erfolgt, nachdem er seinen Betrieb aufgenommen hat, oder nachdem seine Kapazität zu einem beliebigen Zeitpunkt erhöht wurde.

4. Kühlschranksteuerungsverfahren nach Anspruch 1, folgende Schritte umfassend:
- Prüfen, ob der Kompressor (5) arbeitet oder nicht, Schritt (200),
- falls der Kompressor (5) arbeitet, Prüfen, ob die Temperatur im Tiefkühlfach (3) unter einen oberen Grenzwert des Temperaturbereichs fällt, innerhalb dessen die Temperatur des Tiefkühlfachs (3) liegen sollte, Schritt (201),
- wenn die Temperatur des Tiefkühlfachs (3) unter den oberen Grenzwert fällt, Bestimmten der Änderung der Temperatur im Tiefkühlfach (3), Schritt (202), wobei für den Fall, dass eine Erhöhung vorliegt, ein Unterentscheidungsprozess zur Erhöhung der Kapazität des Kompressors (5) wiederholt wird, um zu bestimmen, ob eine solche Erhöhung notwendig ist oder nicht,
- in Fällen, in denen der Temperatursensor (4) ein Abfallen der Temperatur detektiert, Prüfen der Position des Leitblechs (9), Schritt (203),
- falls das Leitblech (9) geschlossen ist, Konstanthalten der Drehzahl des Motors (6) des Kompressors (5) und Unterlassen von Änderungen an der Kapazität des Kompressors (5), Schritt (204),
- falls das Leitblech (9) offen ist und falls sich das Leitblech (9) schließt, bevor eine vorbestimmte Schwellenzeitspanne (t) verstrichen ist, oder falls es sich während einer vorbestimmten Schwellenzeitspanne nicht schließt, Berechnen einer Kühlgeschwindigkeit (Vcooling), Schritt (205),
- Ermitteln der Kapazität des Kompressors (5) entsprechend der Kühlgeschwindigkeit (Vcooling), Schritt (206) und Senken der Kapazität des Kompressors durch Herabsetzen der Drehzahl des Motors (6) des Kompressors (5).

5. Kühlschranksteuerungsverfahren nach Anspruch 4, wobei der Kühlgeschwindigkeitswert, welcher berechnet wird, indem die Differenz zwischen den Temperaturwerten zu dem Zeitpunkt, an dem das Leitblech (9) geschlossen wird, und dem Zeitpunkt, an dem das Leitblech (9) geöffnet wird, durch die Zeitspanne geteilt wird, über die das Leitblech (9) offen geblieben ist, benutzt wird, falls sich das Leitblech (9) schließt, bevor eine vorbestimmte Schwellenzeitspanne (t) abgelaufen ist.

6. Kühlschranksteuerungsverfahren nach Anspruch 4, wobei der Kühlgeschwindigkeitswert, welcher berechnet wird, indem die Differenz zwischen dem Temperaturwert, der am Ende der Schwellenzeitspanne und dem Wert zu dem Zeitpunkt, an dem das Leitblech (9) geöffnet ist, durch die Schwellenzeitspanne (t) geteilt wird, benutzt wird, falls es sich während der vorbestimmten Schwellenzeitspanne (t) nicht schließt.

## Revendications

1. Une méthode de contrôle de réfrigérateur pour un réfrigérateur (1) comprenant un compartiment de stockage des aliments frais (2), un compartiment de congélation (3), un capteur de température (4) prévu dans le compartiment congélateur (3), un déflecteur (9) pour contrôler les flux d'air partant du compartiment congélateur (3) vers le compartiment d'aliments frais (2), un compresseur (5) assurant la circulation d'un réfrigérant, muni d'un moteur (6), un convertisseur (7) démarrant le fonctionnement du compresseur (5) à différents nombre de tours du moteur (6), **caractérisée par** une carte de contrôle (8) permettant audit réfrigérateur (1) de fonctionner comme prévu, ce qui augmente la capacité du compresseur (5) en augmentant le nombre de tours du moteur (6) en fonction de la position ouverte/fermée du déflecteur (9) et le taux d'augmentation de la température dans le compartiment congélateur (3) au cours de l'opération de ce compresseur (5), ou la diminution de la capacité du compresseur (5) en diminuant le nombre de tours pour le moteur (6) en fonction de la vitesse de refroidissement du compartiment congélateur (3) lorsque le déflecteur (9) est ouvert.

2. Une méthode de contrôle de réfrigérateur selon la Revendication 1, comprenant les étapes suivantes:
- pour vérifier si le compresseur (5) est en marche ou non, étape (100),
- si le compresseur (5) est en marche, pour vérifier si la température dans le compartiment congélateur (3) descend en dessous de la valeur limite supérieure de la plage de température dans les limites de laquelle la température du compartiment congélateur (3) devrait être, étape (101a),
- dans le cas où la valeur de la température du compartiment congélateur (3) ne tombe pas en dessous de la limite supérieure la valeur de ladite plage de température, dans une période de temps déterminée étape (101b), augmentation du compresseur (5) et donc du nombre de tours pour le moteur (6) étape (102),
- dans le cas où la valeur de la température du compartiment congélateur (3) tombe en dessous de ladite valeur limite supérieure, mesure de la première et la dernière valeurs de température dans un laps de temps donné par le capteur de température (4) et calcul de la différence de température (ΔT) entre ces valeurs, étape (103),
- si cette différence de température (ΔT) est positive, vérifier la position ouverte/fermée du déflecteur (9), étape (104),
- si le déflecteur est ouvert, comparer la valeur calculée de différence de température (ΔT) à la première valeur de différence de température (ΔT1), étape (105),
- si la valeur de différence de température (ΔT) est plus grande que la première valeur de différence de température (ΔT1), augmentation de la capacité du compresseur (5) par l'augmentation du nombre de tours pour le moteur (6), étape (106),
- si la valeur de différence de température (ΔT) est plus petite que la première valeur de différence de température (ΔT1), garder la capacité du compresseur (5) constante et retourner à l'étape (103) où de nouvelles valeurs de température pourraient être mesurées et une nouvelle différence de température pourrait être calculée,
- à l'étape 104, si le déflecteur est fermé, comparer la valeur calculée de différence de température (ΔT) à la seconde valeur de différence de température (ΔT2), étape (107),
- si la valeur de différence de température (ΔT) est plus grande que la seconde valeur de différence de température (ΔT2), augmentation de la capacité du compresseur (5) par l'augmentation du nombre de tours pour le moteur (6), étape (106),
- si la valeur de différence de température (ΔT) est plus petite que la seconde valeur de différence de température (ΔT2), garder la capacité du compresseur (5) constante et retourner à l'étape (103) où de nouvelles valeurs de température pourraient être mesurées et une nouvelle différence de température pourrait être calculée.

3. Une méthode de contrôle de réfrigérateur selon les Revendications 1 et 2, comprenant l'étape de l'augmentation de la capacité du compresseur (5) par l'augmentation du nombre de tours du moteur (6), étape (106), à la fin de la période de temps déterminée, s'il n'existe pas d'augmentation dans la capacité du compresseur (5) après sa mise en marche ou après l'augmentation à un moment quelconque de sa capacité.

4. Une méthode de contrôle de réfrigérateur selon la Revendication 1, comprenant les étapes suivantes :
- pour vérifier si le compresseur (5) est en marche ou non, étape (200),
- si le compresseur (5) est en marche, pour vérifier si la température dans le compartiment congélateur (3) descend en dessous de la valeur limite supérieure de la plage de température dans les limites de laquelle la température du compartiment congélateur (3) devrait être, étape (201),
- lorsque la valeur de la température du compartiment congélateur (3) tombe en dessous de ladite valeur limite supérieure, déterminer la variation de température dans le compartiment congélateur (3), l'étape (202), et dans le cas où il y aurait une augmentation, un sous-processus de décision d'augmenter la capacité du compresseur (5) sera repris pour déterminer la température quand une telle augmentation est nécessaire ou non,
- dans le cas où le capteur de température (4) détecte une baisse de température, vérifier la position déflecteur (9), étape (203),
- si le déflecteur (9) est fermé, garder constant le nombre de tours du moteur (6) du compresseur (5) et ne faire aucun changement dans la capacité du compresseur (5), étape (204),
- si le déflecteur (9) est ouvert et que le déflecteur (9) se ferme avant une période de seuil prédéterminée (t) est passée ou qu'il n'est pas fermé au cours d'une période de seuil prédéterminée, calculer la vitesse de refroidissement (Vcooling), étape (205),
- trouver la capacité du compresseur (5) correspondant à la vitesse de refroidissement (Vcooling), étape (206), et diminuer la capacité du compresseur (5) en baissant le nombre de tours du moteur (6) du compresseur (5), étape (207).

5. Une méthode de contrôle de réfrigérateur selon la Revendication 4, où la valeur de la vitesse de refroidissement calculée en divisant la différence entre les valeurs de température à des moments où le déflecteur (9) est fermé et que le déflecteur (9) est ouvert par toute la période de temps où le déflecteur (9) reste ouvert, est utilisée dans le cas où le déflecteur (9) se ferme avant que la période de seuil prédéterminée (t) soit passée.

6. Une méthode de contrôle de réfrigérateur selon la Revendication 4, où la valeur de la vitesse de refroidissement calculée en divisant la différence entre la valeur de température déterminée à la fin de la période de seuil et la valeur au moment où le déflecteur (9) est ouvert par la période de seuil (t), est utilisée dans le cas où celui-ci n'est pas fermé durant la période de seuil prédéterminée (t).
